# NEUE EUROPÄISCHE PATENTSCHRIFT

(11) **EP 2 096 351 B2**
(45) Veröffentlichungstag und Bekanntmachung des Hinweises auf die Entscheidung über den Einspruch: **24.01.2018**
(45) Hinweis auf die Patenterteilung: 01.05.2013
(21) Anmeldenummer: 09162930.3
(22) Anmeldetag: 08.05.2006
(51) Int. Cl.: F21S 8/00, H05B 37/02, F21V 14/00

(54) **Beleuchtungsanordnung zur Unterstützung der menschlichen Sehfunktion sowie des Wohlbefindens**
Lighting assembly for supporting human optics and well-being
Dispositif d'éclairage supportant l'optique humaine et le bien-être

(30) Priorität: 13.06.2005 DE 102005027262
(43) Veröffentlichungstag der Anmeldung: 02.09.2009
(62) Teilanmeldung aus: 06742833.4
(73) Patentinhaber: Zumtobel Lighting GmbH, 6850 Dornbirn (AT)
(72) Erfinder: Sejkora, Günther, 6867, Schwarzenberg (AT)
(74) Vertreter: Thun, Clemens

(56) Entgegenhaltungen:
- EP-A1- 0 545 474
- WO-A1-01/88434
- WO-A1-2004/055428
- DE-A1- 3 526 590
- DE-A1- 10 163 958
- DE-A1- 10 210 645
- DE-A1- 10 216 645
- DE-A1- 19 705 288
- DE-C1- 19 808 902
- DE-U1- 20 002 060
- DE-U1- 20 220 855
- JP-A- H04 292 801
- US-A- 4 045 664
- US-A- 4 956 751

## Beschreibung

Die vorliegende Erfindung betrifft eine Anordnung zur Beleuchtung eines zum Aufenthalt von Menschen bestimmten Raumes gemäß dem Oberbegriff des Anspruchs 1, wobei die Anordnung dazu ausgebildet ist, eine erste, die menschliche Sehfunktion unterstützende Lichtkomponente und eine zweite, das biologische Wohlbefinden eines Menschen unterstützende Lichtkomponente abzugeben, und wobei die erste Lichtkomponente eine erste Farbtemperatur und die zweite Lichtkomponente eine gegenüber der ersten Lichtkomponente erhöhte zweite Farbtemperatur aufweist.

Herkömmliche Leuchten und Beleuchtungssysteme unterstützen durch Erzeugen einer entsprechenden Beleuchtungsstärke auf Flächen wie z. B. Arbeitstischen in erster Linie die Sehfunktion des Menschen. Durch Aufhellen einer Arbeitsfläche zum Beispiel wird das Lesen von Unterlagen bzw. das Betrachten von Dokumenten und dgl. deutlich vereinfacht. Hierfür sind unterschiedlichste Maßnahmen bekannt, um die Sehfunktion in besonders effektiver Weise zu unterstützen. Insbesondere ist es üblich, das Licht derart auf Arbeitsflächen zu richten, dass Blendeffekte vermieden werden.

Durch neueste Untersuchungen konnte ferner gezeigt werden, dass auch vegetative Funktionen des Menschen unmittelbar durch Licht beeinflusst werden. So hat sich gezeigt, dass z. B. die Ausschüttung des Hormons Melatonin sowie die Steuerung der Tagesrhythmik eines Menschen von dem zur Verfügung stehenden Licht beeinflusst wird. Während die menschliche Sehfunktion allerdings auf Licht im gelben Bereich des Spektrums, also bei einer Wellenlänge von etwa 550 nm am empfindlichsten ist, haben die zuvor beschriebenen Studien gezeigt, dass das Empfindlichkeitsmaximum für die vegetativen Funktionen eines Menschen im blauen Bereich des Spektrums, also bei ca. 450 nm liegt.

Zwar sind bereits Beleuchtungsanordnungen bekannt, bei denen verschiedenfarbiges Licht unterschiedlicher Lichtquellen zur Beleuchtung eingesetzt wird, hierbei sollen allerdings in erster Linie lichttechnische Effekte erzielt werden, welche für einen Beobachter ansprechend wirken. Abgesehen davon wurden bislang keine besonderen Vorkehrungen getroffen, um beide oben beschriebenen menschlichen Funktionen, also sowohl die Sehfunktion als auch die biologischen Funktionen gleichzeitig zu unterstützen.

Aus der Druckschrift EP 0 545 474 A1 ist eine Beleuchtungsanordnung bekannt, die zum einen Halogenlampen und zum anderen Leuchtstoffröhren aufweist. Weiterhin weist die Beleuchtungsanordnung eine Steuereinheit auf, die über Dimmer sowohl die Halogenlampen, als auch die Leuchtstoffröhren ansteuert.

Der vorliegenden Erfindung liegt dementsprechend die Aufgabe zugrunde, eine neuartige Anordnung zur Beleuchtung eines zum Aufenthalt von Menschen bestimmten Raumes anzugeben, wobei einerseits die Sehfunktion eines Menschen optimal mit weißem Licht unterstützt werden soll und andererseits Licht zur Verfügung gestellt wird, um die vegetativen Funktionen eines Menschen zu unterstützen. Hierbei soll insbesondere eine möglichst hohe Energieeffizienz erreicht werden.

Die Aufgabe wird durch eine Anordnung zur Beleuchtung gemäß dem unabhängigen Anspruch gelöst. Vorteilhafte Weiterbildungen der Erfindung sind Gegenstand der Unteransprüche.

Die vorliegende Erfindung betrifft die Tatsache, dass sich der natürliche Rhythmus eines Menschen im Laufe eines Tages ändert, da zu unterschiedlichen Zeiten unterschiedliche Aufgaben erfüllt werden müssen. Um dem Rechnung zu tragen, kann vorgesehen sein, dass insbesondere die Helligkeit der zweiten Lichtkomponente zeitabhängig eingestellt und damit an den menschlichen Tagesrhythmus angepasst wird.

Gemäß der vorliegenden Erfindung wird also eine Anordnung zur Beleuchtung eines zum Aufenthalt von Menschen bestimmten Raumes vorgeschlagen, welche dazu ausgebildet ist, eine erste, die menschliche Sehfunktion unterstützende Lichtkomponente und eine zweite, das biologische Wohlbefinden eines Menschen unterstützende Lichtkomponente abzugeben, wobei die erste Lichtkomponente eine erste Farbtemperatur von vorzugsweise weniger als 5.000 K aufweist und die zweite Lichtkomponente eine gegenüber der ersten Lichtkomponente erhöhte zweite Farbtemperatur von vorzugsweise mehr als 5.000 K aufweist, und wobei die Beleuchtungsanordnung Steuermittel zur zeitabhängigen Helligkeitssteuerung der zweiten Lichtkomponente aufweist und die Steuermittel zusätzlich auch die erste Lichtkomponente steuern; die erste Lichtkomponente wird dabei gegengleich zur Intensität der zweiten Lichtkomponente gesteuert.

Diese gegengleiche Ansteuerung ist sinnvoll, da die zweite Lichtkomponente zu einem gewissen Teil ebenfalls Licht in dem für die Sehaufgabe optimierten Spektralbereich abstrahlt. Ein durch die Verstärkung der zweiten Lichtkomponente auftretendes Überangebot an Beleuchtungsstärke wird deshalb durch eine Rücknahme der ersten Lichtkomponente zur Mittagszeit hin kompensiert.

Die Steuermittel können insbesondere derart ausgestaltet sein, dass die zweite Lichtkomponente mittags verstärkt zur Verfügung gestellt wird, hingegen morgens und abends reduziert wird. Auf diese Weise werden die vegetativen biologischen Körperfunktionen parallel zum natürlichen Rhythmus eines Menschen unterstützt. Dabei kann die Helligkeit der zweiten Lichtkomponente nicht nur tageszeitabhängig sondern auch jahreszeitabhängig gesteuert werden.

Selbstverständlich besteht die Möglichkeit, auch die erste Lichtkomponente zeitabhängig bzw. von äußeren Einflüssen abhängig einzustellen. Beispielsweise wäre eine Steuerung in Abhängigkeit von dem durch das Fenster eines zu beleuchtenden Raumes einfallenden natürlichen Tageslichts und/oder in Abhängigkeit von dem für die Sehaufgabe nutzbaren Anteils der zweiten Lichtkomponente denkbar, so dass grundsätzlich immer das erforderliche Beleuchtungsniveau erreicht und gleichzeitig möglichst wenig Energie für die Beleuchtung verbraucht wird.

Durch die vorliegende Erfindung werden also Lösungen zur Raumbeleuchtung vorgeschlagen, mit denen erstmalig verschiedene Funktionen eines Menschen gleichzeitig und in optimaler Weise unterstützt werden können.

Nachfolgend soll die Erfindung anhand der beiliegenden Zeichnung näher erläutert werden. Es zeigen:
- Fig. 1: ein erstes Ausführungsbeispiel einer erfindungsgemäßen Beleuchtungsanordnung in Form einer Dekkeneinbauleuchte;
- Fig. 2: ein zweites Ausführungsbeispiel der vorliegenden Erfindung in Form einer Anbauleuchte;
- Fig. 3: ein drittes Ausführungsbeispiel in Form einer modularen Lichtdecke;
- Fig. 4: ein viertes Ausführungsbeispiel in Form einer Lichtdecke;
- Fig. 5: ein fünftes Ausführungsbeispiel in Form einer Wannenleuchte;
- Fig. 6: ein sechstes Ausführungsbeispiel in Form einer Rasterleuchte;
- Fig. 7 und 8: zwei weitere Ausführungsbeispiele, die insbesondere zur Nutzung in kleineren Räumen geeignet sind;
- Fig. 9 und 10: Möglichkeiten zur zeitabhängigen Helligkeitssteuerung der zweiten Lichtkomponente und
- Fig. 11: ein Schema zur zeitabhängigen Helligkeitssteuerung beider Lichtkomponenten.

Gegenstand der vorliegenden Erfindung ist also wie bereits erwähnt eine Leuchte oder eine Kombination von Leuchten, bei denen Licht mit einer ersten Farbtemperatur von vorzugsweise weniger als 5.000 K (die erste Lichtkomponente) mit entsprechenden Mitteln vorzugsweise gerichtet auf die Sehaufgabe abgestrahlt wird und Licht mit einer zweiten Farbtemperatur von vorzugsweise mehr als 5.000 K (die zweite Lichtkomponente) vorzugsweise diffus in den zu beleuchtenden Raum verteilt wird. Von besonderer Bedeutung ist also, dass die zweite Lichtkomponente eine gegenüber der ersten Lichtkomponente erhöhte Farbtemperatur aufweist. Die diffus abstrahlenden Flächen der Beleuchtungsanordnung sind dabei vorzugsweise oberhalb der Blickrichtung angeordnet, um die vegetativen Funktionen eines Menschen in optimaler Weise zu unterstützen.

Die Lichtquellen, welche das Licht der höheren und der niedrigeren Farbtemperatur erzeugen, sind vorzugsweise unabhängig voneinander regelbar, so dass der Anteil mit der höheren Farbtemperatur über den Tag entsprechend einer Wachkurve verändert werden kann. Dies bedeutet, dass am Morgen und am Abend weniger Licht höherer Farbtemperatur abgegeben wird, während hingegen zur Mittagszeit viel Licht mit dieser Farbtemperatur zur Verfügung gestellt wird. Der Anteil der Lichtkomponente mit der niedrigen Farbtemperatur hingegen kann entsprechend den Sehaufgaben und dem natürlichen Tageslichtangebot eingestellt werden. Wichtig hierbei ist, dass beide Lichtquellen kein farbiges Licht sondern stattdessen weißes Licht unterschiedlicher Farbtemperatur erzeugen. Hierdurch ist sichergestellt, dass unabhängig von der Lichtmenge aus beiden Quellen immer eine erforderliche Farbwiedergabe erreicht wird.

Zur Realisierung des soeben beschriebenen generellen Konzepts der vorliegenden Erfindung bestehen mehrere Möglichkeiten, die nachfolgend anhand der verschiedenen Figuren erläutert werden sollen.

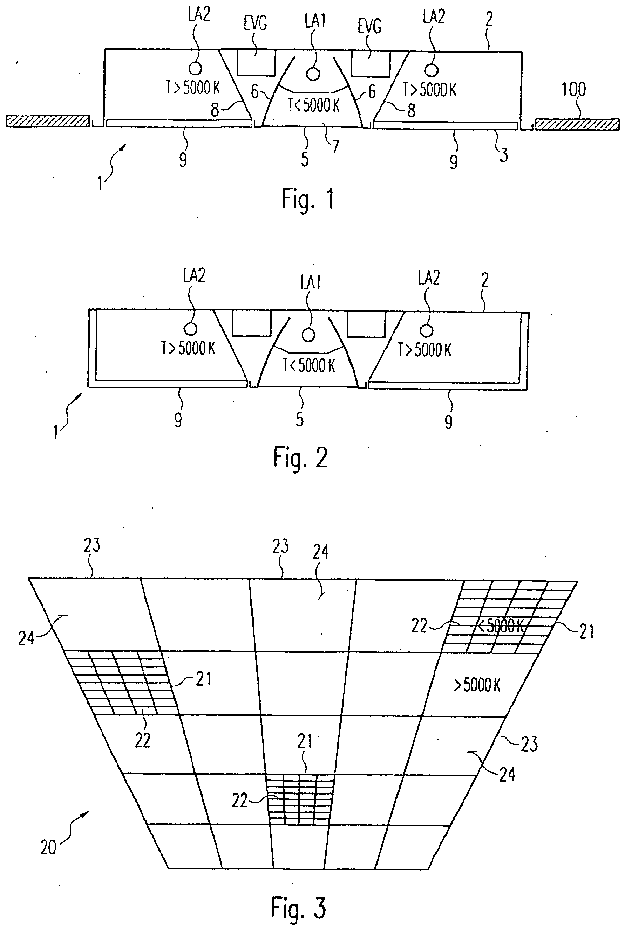

Ein erstes Beispiel in Form einer allgemein mit dem Bezugszeichen 1 versehenen Leuchte ist in Fig. 1 dargestellt. Das innerhalb einer Öffnung einer (bspw.) abgehängten Decke 100 anzuordnende Leuchtengehäuse 2 ist mittels Zwischenwänden 8 in unterschiedliche Bereiche unterteilt, in denen jeweils verschiedene Lichtquellen angeordnet sind. Ein erster mittlerer Bereich dient dabei zur Anordnung einer ersten Lichtquelle LA1, welche zur Unterstützung der Sehaufgabe vorgesehen ist und hierzu Weißlicht mit einer Farbtemperatur unterhalb von 5.000 K abgibt. Wie bereits erwähnt wurde, ist diese erste Lichtkomponente in besonders guter Weise dazu geeignet, die menschliche Sehfunktion zu unterstützen.

Da bei der Unterstützung der menschlichen Sehfunktion gezielt bestimmte Bereiche ausgeleuchtet werden sollten, ist vorzugsweise vorgesehen, dass das Licht dieser ersten Lichtquelle LA1 über ein Leuchtenraster 5 gerichtet abgestrahlt wird. Das Leuchtenraster weist hierzu zwei, die Lichtquelle LA1 seitlich umfassende Seitenreflektoren 6 auf, welche über sich quer zu den Seitenreflektoren 6 erstreckende Querlamellen 7 miteinander verbunden sind. Derartige Leuchtenraster sind bereits hinlänglich bekannt und dienen dazu, das Licht einer Lichtquelle lediglich in einem bestimmten Winkelbereich abzugeben, um bspw. Blendeffekte zu vermeiden. Das Licht der ersten Lichtquelle LA1 wird also gezielt auf einen bestimmten Bereich des zu beleuchtenden Raumes gerichtet.

Neben dieser ersten Lichtquelle LA1 sind in dem Gehäuse 2 zwei weitere Lichtquellen LA2 angeordnet, welche sich in seitlichen Bereichen des Gehäuses 2 befinden, die durch die Seitenwände 8 von dem mittleren Bereich mit der ersten Lichtquelle LA1 getrennt sind. Diese Lichtquellen LA2 dienen zur Erzeugung der zweiten Lichtkomponente und geben dementsprechend Weißlicht mit einer höheren Farbtemperatur ab, die vorzugsweise oberhalb von 5.000 K liegt. Wie bereits zuvor erläutert wurde, ist es erstrebenswert, dieses Licht möglichst diffus abzustrahlen, da dieses Licht dann in besonders guter Weise von einem menschlichen Auge erfasst werden kann. Die Gehäusebereiche, in denen diese zwei Lichtquellen LA2 angeordnet sind, sind dementsprechend an der Unterseite mit opalen Lichtabstrahlplatten 9 versehen, durch welche das von den Lichtquellen LA2 abgegebene Licht diffus abgestrahlt wird.

Die Seitenwände 8 können vorzugsweise ebenso wie die Innenseite des Gehäuses 2 reflektierend ausgestaltet sein, um das von den verschiedenen Lichtquellen LA1, LA2 abgegebene Licht möglichst optimal zu nutzen. Innerhalb des Gehäuses 2 können ferner Lampeabebriebsgeräte in Form von elektronischen Vorschaltgeräten (EVG) vorgesehen sein, mit deren Hilfe die Lichtquellen betrieben werden. Hierdurch besteht die Möglichkeit, die Helligkeit der verschiedenen Lichtkomponenten entsprechend den speziellen Wünschen eines Nutzers bzw. automatisch anzupassen.

Insgesamt wird also eine Leuchte geschaffen, über die zum einen Licht einer niedrigeren Farbtemperatur gerichtet und zum anderen Licht einer höheren Farbtemperatur diffus abgestrahlt wird. Vorzugsweise sind die Größenverhältnisse für die opalen Abstrahlplatten 9 und das Raster 5 derart gewählt, dass die Fläche zur Lichtabstrahlung der zweiten Lichtkomponente mindestens doppelt so groß ist wie die Lichtaustrittsfläche des Rasters 5. Es hat sich gezeigt, dass durch diese Wahl der Größenverhältnisse für die Abstrahlflächen der beiden verschiedenen Lichtkomponenten die angestrebten Ziele zur Unterstützung der Sehfunktion sowie des Wohlbefindens eines Menschen in besonders effektiver Weise nebeneinander erreicht werden können.

Eine Variante der in Fig. 1 dargestellten Leuchte ist in Fig. 2 dargestellt. Hierbei handelt es sich um eine Deckenanbauleuchte, deren Gehäuse 2 wiederum zunächst derart unterteilt ist, dass einerseits über ein Leuchtenraster 5 Licht einer ersten Lichtquelle LA1 mit einer niedrigeren Farbtemperatur von unterhalb von 5.000 K gerichtet abgestrahlt wird, während hingegen das Licht von zweiten Lichtquellen LA2 mit einer Farbtemperatur von oberhalb von 5.000 K diffus abgestrahlt wird. Im Gegensatz zu der Leuchte in Fig. 1, bei welcher zum Abstrahlen der zweiten Lichtkomponente opale Platten genutzt werden, werden bei der Leuchte von Fig. 2 opale bzw. diffus abstrahlende quaderförmige Seitenteile 9 eingesetzt, welche sich bis zur Bodenseite des Gehäuses 2 erstrecken. Der Vorteil dieser Ausgestaltung besteht darin, dass auch unter flachen Winkeln die Abbildung der zweiten Lichtkomponente auf der unteren Netzhauthälfte immer gleich groß ist. Hierdurch wird also nochmals eine besondere Maßnahme getroffen, die sicherstellt, dass das Licht der zweiten Lichtkomponente optimal dazu genutzt wird, das menschliche Wohlbefinden zu unterstützen. Die opalen Seitenteile bzw. Lichtabstrahlkörper 9 könnten anstatt der abgewinkelt dargestellten Ausführungsform auch halb- oder viertelzylindrisch bzw. oval ausgeführt sein. Der Vorteil der Ausgestaltung als Viertelzylinder besteht darin, dass dann von allen Richtungen aus immer eine gleich große Fläche für einen Betrachter sichtbar ist.

In den Fig. 1 und 2 waren Beispiele einer Beleuchtungsanordnung dargestellt, welche durch eine einzelne Leuchte gebildet wurden. Fig. 3 zeigt nunmehr eine Variante, bei der die Beleuchtungsanordnung aus mehreren Einzelleuchten gebildet ist. Hierbei wird eine modulare Lichtdecke 20 gebildet, welche einerseits aus quadratischen Rasterleuchten 21 und andererseits aus quadratischen, opalen Wannenleuchten 23 besteht. Die Rasterleuchten 21 sind dabei wiederum derart ausgestaltet, dass sie Licht mittels einer Rasteranordnung 22 gerichtet zur Unterseite hin abstrahlen. Dementsprechend sind diese ersten Leuchten 21 dazu vorgesehen, das Licht der ersten Komponente mit der niedrigeren Farbtemperatur abzustrahlen. Die opalen Wannenleuchten 23 hingegen weisen diffus abstrahlende Lichtabstrahlflächen 24 auf, über welche Licht der zweiten Komponente mit einer gegenüber der ersten Farbtemperatur erhöhten zweiten Farbtemperatur von abgestrahlt wird.

Wiederum wird hierdurch einerseits gerichtetes Licht zur Unterstützung der Sehfunktion sowie andererseits diffuses Licht zur Unterstützung des menschlichen Wohlbefindens zur Verfügung gestellt. Durch die Größe der Lichtdecke 20 ist dabei sichergestellt, dass unabhängig vom Standort eines Menschen immer gleich viel Licht der zweiten Lichtkomponente durch die untere Netzhauthälfte des Menschen empfangen wird. Vorzugsweise ist das Größenverhältnis zwischen den verschiedenen Leuchten 21, 23 derart bemessen, dass die Lichtabstrahlfläche der Rasterleuchten 29 im Vergleich zur Lichtabstrahlfläche der Wannenleuchten 23 1:4 bis 1:25 beträgt.

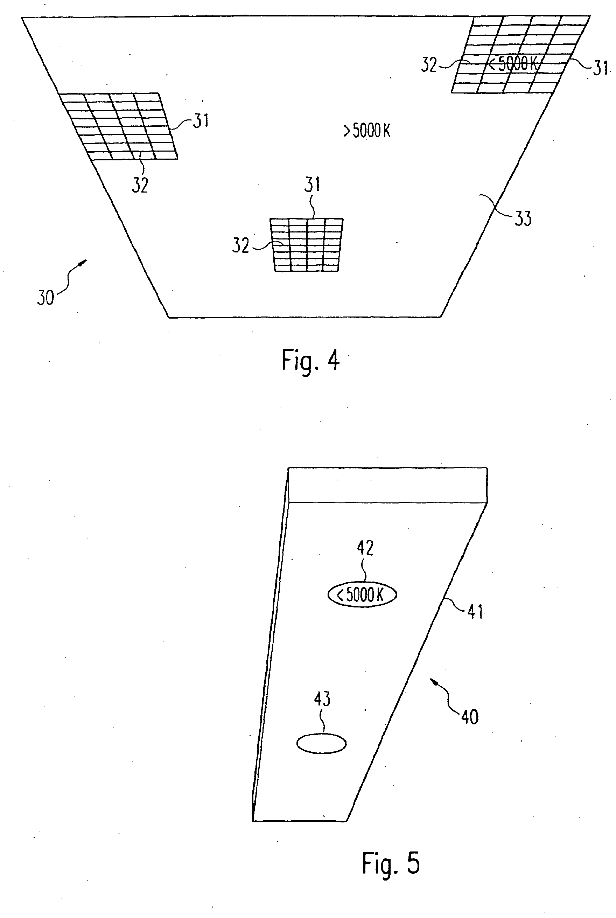

Alternativ zu der Ausgestaltung gemäß Fig. 3 kann auch vorgesehen sein, dass anstelle einzelner opaler Wannenleuchten eine gesamte Lichtdecke zur diffusen Lichtabstrahlung der zweiten Lichtkomponente genutzt wird. Bei dem in Fig. 4 dargestellten Ausführungsbeispiel, bei dem die Beleuchmngsanordnung allgemein mit dem Bezugszeichen 30 versehen ist, sind dann innerhalb dieser Lichtdecke 33 zur Abstrahlung der zweiten Lichtkomponente einzelne Rasterleuchten 31 mit Rasteranordnungen 32 angeordnet, über welche wiederum das Licht der ersten Lichtkomponente zur Unterstützung der Sehfunktion gerichtet abgegeben wird. In gleicher Weise wie bei dem Ausführungsbeispiel gemäß Fig. 3 werden also wiederum die verschiedenen Lichtkomponenten zur Unterstützung der unterschiedlichen Funktionen zur Verfügung gestellt, wobei die Größenverhältnisse für die Lichtabstrahlflächen der beiden Lichtkomponenten wiederum vorzugsweise im Bereich zwischen 1:4 und 1:25 liegen.

Eine weitere Möglichkeit zur Realisierung einer erfindungsgemäßen Beleuchtungsanordnung ist in Fig. 5 dargestellt. Hierbei wird die Beleuchtungsanordnung 40 durch eine größere opale Wannenleuchte 41 gebildet, die zum Einbau oder Deckenanbau vorgesehen sein kann und eine größere Breite aufweist. Über diese opale Wannenleuchte wird zunächst das Licht der zweiten Lichtkomponente mit der Farbtemperatur oberhalb von 5.000 K diffus abgestrahlt. Innerhalb der Wannenleuchte sind allerdings einzelne Strahler bzw. sogenannte Downlights 42 angeordnet, über die gezielt Licht der ersten Lichtkomponente zur Unterseite hin abgestrahlt wird. Mittels dieser Downlights 42 kann also bewusst ein ganz bestimmter Bereich, der zur Arbeit genutzt wird, mittels der ersten Lichtkomponente ausgeleuchtet werden.

Bei den bislang beschriebenen Ausführungsbeispielen wurden beide Lichtkomponenten grundsätzlich in direkter Weise abgestrahlt. Dies ist für die erste Lichtkomponente, welche zur Unterstützung der Sehfunktion vorgesehen ist, ohnehin vorteilhaft, da nur bei einer direkten Lichtabstrahlung das Licht in optimaler Weise zur Unterstützung der Sehfunktion zur Verfügung gestellt werden kann. Die zweite Lichtkomponente hingegen zur Unterstützung des menschlichen Wohlbefindens muss nicht zwangsläufig direkt abgestrahlt werden.

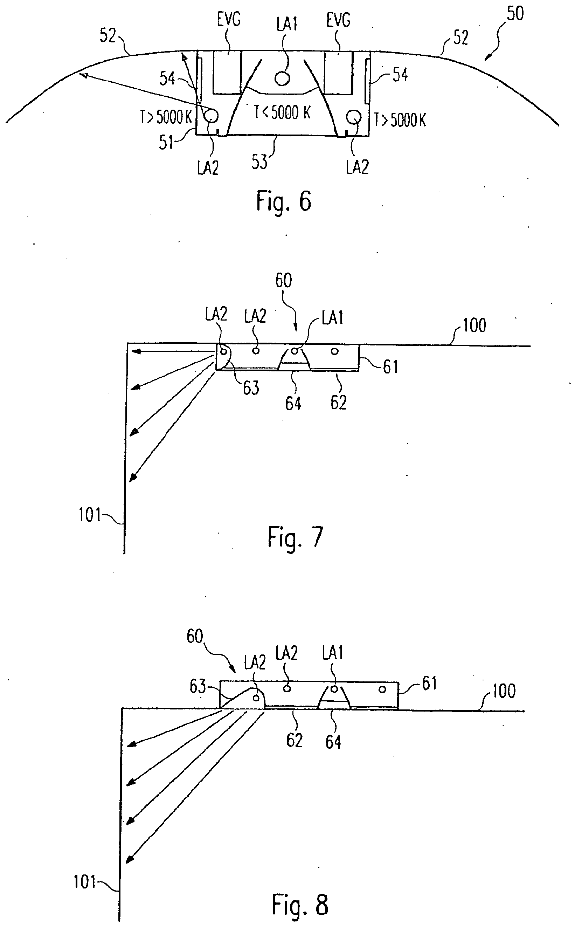

Bei dem Ausführungsbeispiel gemäß Fig. 6 ist dementsprechend eine Leuchte 50 vorgesehen, in deren Leuchtengehäuse 51 zunächst wiederum die beiden verschiedenen Lichtquellen LA1 und LA2 angeordnet sind. Das Licht der ersten Lichtquelle LA1 wird wiederum über ein Raster 53 gerichtet zur Unterseite hin abgestrahlt. Das Licht der zweiten Lichtquellen LA2 mit der Farbtemperatur oberhalb von 5.000 K hingegen wird nunmehr dazu genutzt, einen das Leuchtengehäuse 51 übergreifenden und konkav gekrümmten Sekundärreflektor 52 anzustrahlen. Hierfür sind innerhalb des Leuchtengehäuses 51 seitliche Öffnungen bzw. transparente Fenster 54 vorgesehen, über welche eine seitliche Lichtabgabe der zweiten Lichtkomponente ermöglicht ist. Wie schematisch anhand der beiden Lichtstrahlen dargestellt ist, wird nunmehr das Licht dieser zweiten Lichtkomponente auf den vorzugsweise diffus reflektierenden Sekundärreflektor 52 abgegeben, wodurch somit der den Leuchtenkörper 51 umgebende Bereich mittels der zweiten Lichtkomponente indirekt aufgehellt wird. Auf diese Weise wird wiederum das Licht der beiden verschiedenen Lichtkomponenten in geeigneter Weise zur Unterstützung der Sehfunktion und des Wohlbefindens zur Verfügung gestellt.

Der Gedanke, die zweite Lichtkomponente im Rahmen einer Indirektbeleuchtung zur Verfügung zu stellen, ist auch bei den Ausführungsbeispielen der Fig. 7 und 8 vorgesehen. Diese Ausführungsbeispiele eignen sich speziell für kleinere Räume, bei denen der Großteil der oberhalb der Augachse liegenden Raumbegrenzungsflächen durch Wände und nicht durch die Decke gebildet wird.

Bei den Ausführungsbeispielen in den Fig. 7 und 8 ist dementsprechend vorgesehen, dass innerhalb des Leuchtengehäuses 61 zunächst mehrere Lichtquellen LA2 zur Erzeugung des Lichts mit der höheren Farbtemperatur angeordnet sind. Das Leuchtengehäuse ist an seiner Unterseite wiederum mit einer opalen Lichtabstrahlplatte 62 abgedeckt, über welche das Licht dieser zweiten Lichtquellen LA2 abgegeben wird. Zusätzlich ist nunmehr allerdings im seitlichen Bereich des Leuchtengehäuses ein sog. Wandfluter 63 vorgesehen, der ebenfalls Licht mit einer Farbtemperatur von größer als 5.000 K abgibt und dazu ausgestaltet ist, die Wand 101 des Raums, innerhalb der sich die Leuchte 60 befindet, zu beleuchten. Dieser Wandfluter 63 ist dabei vorzugsweise derart ausgestaltet, dass lediglich der Wandbereich beleuchtet wird, der sich oberhalb der Augachse befindet, also oberhalb von etwa 1,6 m für einen stehenden Menschen bzw. oberhalb von etwa 1,2 m für einen sitzenden Menschen. Hierdurch wird zusätzlich zu dem über die opale Lichtabstrahlplatte 62 abgestrahlten Licht weiteres Licht der zweiten Lichtkomponente in indirekter Weise zur Verfügung gestellt, wobei die Bestrahlung der Wand 101 gezielt derart erfolgt, dass das indirekt zur Verfügung gestellte Licht derart ausgestaltet ist, dass es das menschliche Wohlbefinden in optimierter Weise unterstützt.

Selbstverständlich weist die in den Fig. 7 und 8 dargestellte Leuchte 60 auch eine erste Lichtquelle LA1 zur Erzeugung der ersten Lichtkomponente auf, deren Licht wiederum vorzugsweise über ein Raster 64 zur Unterseite hin abgestrahlt wird.

Anzumerken ist, dass die ergänzende Nutzung der Wandfluter bei sämtlichen zuvor beschriebenen Ausführungsbeispielen denkbar wäre. Wie bereits erwähnt wurde, besteht hierdurch die Möglichkeit, auch in kleineren Räumen ausreichend Licht der zweiten Lichtkomponente zur Verfügung zu stellen, ohne hierzu allzu große Leuchtenkörper einsetzen zu müssen.

Sämtliche beschriebenen Ausführungsbeispiele der vorliegenden Erfindung beruhen also auf der Idee, zwei unterschiedliche Lichtkomgonenten zur Verfügung zu stellen, welche jeweils bestimmte Anforderungen bzw. Funktionen erfüllen. Die Abstrahlung der verschiedenen Lichtkomponenten ist dabei derart gewählt, dass die jeweilige Lichtkomponente in optimaler Weise von einer sich in dem zu beleuchten Raum bzw. Bereich aufbaltenden Person erfasst und zur Unterstützung der entsprechenden Funktion genutzt werden kann. Die Lichtquellen sind dabei vorzugsweise derart ausgestaltet, dass ihre Intensität verändert bzw. variiert werden kann. Der Grund hierfür ist, dass auch die Anforderungen an die verschiedenen Lichtkomponenten sich im Laufe des Tages ändern.

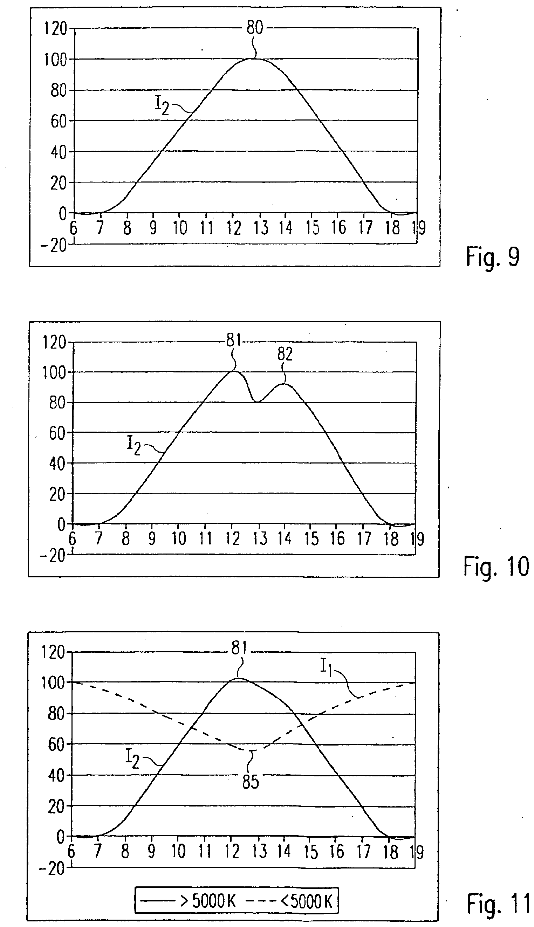

Es ist dementsprechend erfindungsgemäß vorgesehen, dass den Beleuchtungsanordnungen Steuermittel zugeordnet sind, die beispielsweise in die Lampenbetriebsgeräte EVG integriert sind und mit deren Hilfe die Helligkeit bzw. Intensität der verschiedenen Lichtkomponenten zeitabhängig gesteuert werden kann. Hierfür bestehen unterschiedliche Möglichkeiten zur zeitabhängigen Steuerung, die nachfolgend anhand der Fig. 9 bis 11 näher beschrieben werden sollen.

In einer ersten (nicht von den Ansprüchen erfassten) Ausführungsform, welche in Fig. 9 dargestellt ist, bleibt die erste Lichtkomponente zur Unterstützung der Sehfunktion von der automatischen Steuerung unberücksichtigt. Die Helligkeit dieser ersten Lichtkomponente kann also bei dieser ersten Variante lediglich durch einen manuellen Eingriff des Benutzers der Sehaufgabe angepasst werden, was durchaus sinnvoll ist, sofern diese Lichtkomponente nur in bestimmten Zeiträumen benötigt wird. Die zweite Lichtkomponente mit einer Farbtemperatur oberhalb von 5.000 K wird hingegen automatisch gesteuert, wobei die Intensität dieser Komponente entsprechend der natürlichen Rhythmik des Menschen nach einer einfachen Zeitfunktion nachgeführt wird. Die in Fig. 9 dargestellte Intensitätskurve I₂ für diese zweite Lichtkomponente nimmt also um die Mittagszeit ein Maximum 80 an, während hingegen morgens und abends weniger Licht in der entsprechenden Farbtemperatur zur Verfügung gestellt wird.

Eine Variante der zeitabhängigen Steuerung gemäß dem Ausführungsbeispiel von Fig. 9 besteht darin, am frühen Nachmittag nach einem leichten Rückgang der Intensität der zweiten Komponente nochmals die Intensität leicht anzuheben, um das üblicherweise auftretende "Nachmittagsloch" im natürlichen Aktivierungsablauf eines Menschen durch eine verstärkte Unterstützung der vegetativen Funktion zu überbrückten. Die hierbei gebildete und in Fig. 10 dargestellte Intensitäfskurve I₂ weist also zwei Maxima 81 und 82 auf, welche in etwa bei 12.00 Uhr bzw. 14.30 Uhr liegen.

Während bei der ersten Ausführungsform über die zeitabhängige Steuerung lediglich die Intensität der zweiten Lichtkomponente automatisch eingestellt wurde, ist in einer zweiten (von den Ansprüchen erfassten) Ausführungsform vorgesehen, beide Lichtkomponenten gegengleich zu steuern. Hierbei wird wiederum die zweite Lichtkomponente so gesteuert, dass sie dem natürlichen Rhythmus des Menschen entspricht. Es wird also wenig Licht am Morgen und am Abend zur Verfügung gestellt, während hingegen die Intensitätskurve I₂ gemäß der Darstellung in Fig. 11 wiederum zur Mittagszeit ein Maximum 80 (oder ggf. entsprechend der Variante von Fig. 10 zwei Maxima) annimmt. Die erste Lichtkomponente mit einer Farbtemperatur unterhalb von 5.000 K wird demgegenüber gegengleich gesteuert, ihre Intensitätskurve I₁ nimmt also um die Mittagszeit herum ein Minimum 85 an. Diese gegengleiche Ansteuerung ist sinnvoll, da die zweite Lichtkomponente zu einem gewissen Teil ebenfalls Licht in dem für die Sehaufgabe optimierten Spektralbereich abstrahlt. Ein durch die Verstärkung der zweiten Lichtkomponente auftretendes Überangebot an Beleuchtungsstärke wird deshalb durch eine Rücknahme der ersten Lichtkomponente zur Mittagszeit hin kompensiert.

Eine dritte Ausführungsform besteht darin, wiederum zunächst die zweite Lichtkomponente so zu steuern, dass sie dem natürlichen Rhythmus des Menschen entspricht. Die erste Lichtkomponente hingegen wird nunmehr in Abhängigkeit von dem durch die Fenster des zu beleuchtenden Raumes einfallenden Tageslicht sowie in Abhängigkeit von dem für die Sehfunktion nutzbaren Anteils der zweiten Lichtkomponente gesteuert. Auf diese Weise wird erreicht, dass immer das erforderliche Beleuchtungsniveau erreicht wird und gleichzeitig möglichst wenig Energie für die Beleuchtung verbraucht wird. Die Steuerkurve für die erste Lichtkomponente ähnelt dabei der Darstellung in Fig. 11, allerdings wird der Rückgang der ersten Lichtkomponente während des Tages je nach Tageslichtangebot deutlich stärker ausfallen.

In einer vierten Ausführungsform schließlich wird die zweite Lichtkomponente nicht nur tageszeitabhängig, sondern auch jahreszeitabhängig gesteuert. Während der Herbst- und Wintermonate wird also deutlich mehr Licht der zweiten Komponente zur Verfügung gestellt werden als während der Frühjahrs- und Sommermonate, um hierdurch das fehlende Angebot an natürlichem Licht im Freien auszugleichen. Die erste Lichtkomponente kann wiederum entsprechend den zuvor beschriebenen Ausführungsbeispielen konstant bleiben, zur Mittagszeit hin zurückgenommen werden oder in Abhängigkeit von Tageslichtangebot und Verlauf der zweiten Lichtkomponente automatisch gesteuert werden.

Insgesamt wird somit durch die vorliegende Erfindung eine Beleuchtungsanordnung zur Verfügung gestellt, welche die an sie gestellten Anforderungen zur Ausleuchtung eines Raumes optimal erfüllt und darüber hinaus derart ausgestaltet ist, dass die vegetativen Funktionen eines Menschen, der sich innerhalb des beleuchteten Bereichs aufhält, optimal unterstützt werden. Ein besonderer Vorteil der vorliegenden Erfindung besteht dabei darin, dass sowohl die Sehfunktion als auch die vegetativen Funktionen gleichzeitig in geeigneter Weise unterstützt werden.

## Patentansprüche

1. Anordnung (1, 20, 30, 40, 50, 60) zur Beleuchtung eines zum Aufenthalt von Menschen bestimmten Raumes, mit Lichtquellen (LA1, LA2) zur Abgabe einer ersten und einer zweiten Lichtkomponente, wobei die erste Lichtkomponente eine erste Farbtemperatur aufweist, um die menschliche Sehfunktion zu unterstützen, und die zweite Lichtkomponente eine gegenüber der ersten Lichtkomponente höhere zweite Farbtemperatur aufweist, um das biologische Wohlbefinden eines Menschen zu unterstützen,
wobei die Anordnung Steuermittel (EVG) zur zeitabhängigen Helligkeitssteuerung der zweiten Lichtkomponente aufweist und die Steuermittel (EVG) zusätzlich auch die erste Lichtkomponente steuern und
wobei die erste Lichtkomponente gegengleich zur Intensität der zweiten Lichtkomponente gesteuert wird,
**dadurch gekennzeichnet,**
**dass** die Abstrahlfläche für die zweite Lichtkomponente mindestens doppelt so groß ist wie die Abstrahlfläche für die erste Lichtkomponente.

2. Anordnung nach Anspruch 1,
**dadurch gekennzeichnet,**
**dass** die Steuermittel (EVG) die Lichtquellen (LA2) zur Erzeugung der zweiten Lichtkomponente entsprechend der natürlichen Rhythmik eines Menschen tageszeitabhängig ansteuern.

3. Anordnung nach Anspruch 2,
**dadurch gekennzeichnet,**
**dass** die Steuermittel (EVG) die Lichtquellen (LA2) zur Erzeugung der zweiten Lichtkomponente derart ansteuern, dass die Intensität (I₂) der zweiten Lichtkomponente zur Mittagszeit ein Maximum (80) annimmt.

4. Anordnung nach Anspruch 2,
**dadurch gekennzeichnet,**
**dass** die Steuermittel (EVG) die Lichtquellen (LA2) zur Erzeugung der zweiten Lichtkomponente derart ansteuern, dass die Intensität (I₂) der zweiten Lichtkomponente zur Mittagszeit ein erstes Maximum (81) sowie nach einem vorübergehenden Rückgang am frühen Nachmittag ein zweites Maximum (82) annimmt.

5. Anordnung nach einem der vorhergehenden Ansprüche,
**dadurch gekennzeichnet,**
**dass** die Steuermittel (EVG) bei der Ansteuerung der Lichtquellen (LA2) zur Erzeugung der zweiten Lichtkomponente zusätzlich die Jahreszeit berücksichtigen.

6. Anordnung nach einem der vorhergehenden Ansprüche,
**dadurch gekennzeichnet,**
**dass** bei der Ansteuerung der ersten Lichtkomponente das in den zu beleuchtenden Raum einfallende Tageslicht berücksichtigt wird.

7. Anordnung nach einem der vorherigen Ansprüche,
**dadurch gekennzeichnet,**
**dass** die erste Farbtemperatur der ersten Lichtkomponente unterhalb von 5.000 K und die zweite Farbtemperatur der zweiten Lichtkomponente oberhalb von 5.000 K liegt.

8. Anordnung nach einem der vorherigen Ansprüche, **dadurch gekennzeichnet,**
**dass** die erste Farbtemperatur der ersten Lichtkomponente unterhalb von 5.000 K und die zweite Farbtemperatur der zweiten Lichtkomponente oberhalb von 5.000 K liegt.

## Claims

1. Arrangement (1, 20, 30, 40, 50, 60) for illuminating a room intended for human residence, comprising light sources (LA1, LA2) for emitting a first and a second light component, wherein the first light component comprises a first color temperature in order to support the human visual function while the second light component comprises a higher second color temperature than the first light component in order to support the biological well-being of a human,
wherein the arrangement comprises control means (EVG) for time-dependent brightness control of the second light component, while the control means (EVG) also control the first light component and
wherein the first light component is controlled in mutual opposition to the intensity of the second light component,
**characterized in that**
the emission surface area for the second light component is at least twice as large as the emission surface area for the first light component.

2. Arrangement according to claim 1,
**characterized in that**
the control means (EVG) activate the light sources (LA2) in order to generate the second light component in accordance with the natural rhythm of a person as a function of the time of day.

3. Arrangement according to claim 2,
**characterized in that**
the control means (EVG) activate the light sources (LA2) in order to generate the second light component in such a way that the intensity (I2) of the second light component assumes a maximum (80) at midday.

4. Arrangement according to claim 2,
**characterized in that**
the control means (EVG) activate the light sources (LA2) in order to generate the second light component in such a way that the intensity (I2) of the second light component assumes a first maximum (81) at midday and also, after a temporary decrease, a second maximum (82) early in the afternoon.

5. Arrangement according to one of the preceding claims,
**characterized in that**
during the activation of the light sources (LA2) in order to generate the second light component the control means (EVG) additionally take into consideration the time of year.

6. Arrangement according to one of the preceding claims,
**characterized in that**
during the activation of the first light component the daylight that is incident in the space that is to be illuminated is taken into consideration.

7. Arrangement according to one of the previous claims,
**characterized in that**
the first colour temperature of the first light component lies below 5,000 K, and the second colour temperature of the second light component lies above 5,000 K.

8. Arrangement according to one of the previous claims,
**characterized in that**
the first colour temperature of the first light component lies below 5,000 K, and the second colour temperature of the second light component lies above 5,000 K.

## Revendications

1. Dispositif (1, 20, 30, 40, 50, 60) pour l'éclairage d'une pièce destinée au séjour d'êtres humains, avec des sources de lumière (LA1, LA2) pour l'émission d'une première et d'une deuxième composante lumineuse, la première composante lumineuse présentant une première température chromatique afin de soutenir la fonction visuelle humaine et la deuxième composante lumineuse présentant une deuxième température chromatique supérieure à celle de la première composante lumineuse, afin de soutenir le bien-être biologique d'un être humain,
le dispositif comprenant des moyens de commande (EVG) pour la commande de la luminosité en fonction du temps de la deuxième composante lumineuse et les moyens de commande (EVG) contrôlant en outre la première composante lumineuse et
la première composante lumineuse étant contrôlée en sens inverse de l'intensité de la deuxième composante lumineuse,
**caractérisé en ce**
**que** la surface d'émission pour la deuxième composante lumineuse est au moins deux fois plus grande que la surface d'émission pour la première composante lumineuse.

2. Ensemble selon la revendication 1,
**caractérisé en ce**
**que** les moyens de commande (EVG) commandent selon le moment de la journée les sources de lumière (LA2) servant à produire la deuxième composante de lumière de manière à correspondre au rythme naturel d'une personne.

3. Ensemble selon la revendication 2,
**caractérisé en ce**
**que** les moyens de commande (EVG) commandent les sources de lumière (LA2) servant à produire la deuxième composante de lumière de telle manière que l'intensité (I2) de la deuxième composante de lumière prend une valeur maximale (80) pour midi.

4. Ensemble selon la revendication 2,
**caractérisé en ce**
**que** les moyens de commande (EVG) commandent les sources de lumière (LA2) servant à produire la deuxième composante de lumière de telle manière que l'intensité (I2) de la deuxième composante de lumière prend une première valeur maximale (81) vers midi ainsi qu'une deuxième valeur maximale (82) en début d'après-midi après une baisse temporaire.

5. Ensemble selon l'une quelconque des revendications précédentes,
**caractérisé en ce**
**que** les moyens de commande (EVG) tiennent compte lors de la commande des sources de lumière (LA2) servant à produire la deuxième composante de lumière également de la saison.

6. Ensemble selon l'une quelconque des revendications précédentes,
**caractérisé en ce**
**qu'**on tient compte lors de la commande de la première composante de lumière de la lumière naturelle incidente dans le local à éclairer.

7. Ensemble selon l'une quelconque des revendications précédentes,
**caractérisé en ce**
**que** la première température de couleur de la première composante de lumière est inférieure à 5.000 K, et **en ce que** la deuxième température de lumière de la deuxième composante de lumière est supérieure à 5.000 K.

8. Ensemble selon l'une quelconque des revendications précédentes,
**caractérisé en ce**
**que** la première température de couleur de la première composante de lumière est inférieure à 5.000 K, et **en ce que** la deuxième température de lumière de la deuxième composante de lumière est supérieure à 5.000 K.
